# EUROPÄISCHE PATENTSCHRIFT

(11) **EP 0 361 158 B1**
(45) Veröffentlichungstag und Bekanntmachung des Hinweises auf die Patenterteilung: **27.04.1994**
(21) Anmeldenummer: 89116474.1
(22) Anmeldetag: 06.09.1989
(51) Int. Cl.: H04M 19/00

(54) **Teilnehmeranschlussschaltung einer digitalen Zeitmultiplex-Fernmeldevermittlungsstelle**
Subscriber connecting circuit for a digital time division switching exchange
Circuit de raccordement d'abonné d'un central de commutation numérique à répartition dans le temps

(30) Priorität: 30.09.1988 DE 3833313
(43) Veröffentlichungstag der Anmeldung: 04.04.1990
(73) Patentinhaber: SIEMENS AKTIENGESELLSCHAFT, 80333 München (DE)
(72) Erfinder: Wingerath, Norbert, Dipl.-Ing., D-8000 München 70 (DE); Stader, Harald, Dipl.-Ing., D-8000 München 71 (DE)

(56) Entgegenhaltungen:
- EP-A- 0 194 177
- EP-A- 0 217 130
- PATENT ABSTRACTS OF JAPAN, Band 8, Nr. 250 (E-279)[1687], 16. November 1984 & JP-A-59 127 500
- IEEE JOURNAL OF SOLID-STATE CIRCUITS, Band SC-16, Nr. 4, August 1981, Seiten 261-266, IEEE, New York, US; D.W. AULL et al.: "A high-voltage IC for a transformerless trunk and subscriber line interface"

## Beschreibung

Die Erfindung betrifft eine Teilnehmeranschlußschaltung einer digitalen Zeitmultiplex-Fernmeldevermittlungsstelle mit einer in einen Hochvoltteil und einen Niedervoltteil gegliederten Schnittstellenschaltung für den Anschluß einer analogen Teilnehmeranschlußleitung, bei der der Hochvoltteil in belegungsfreien Zeiten abgeschaltet ist und bei der der Niedervoltteil zwischen einer positiven und einer negativen Versorgungsspannung betrieben wird und über eine digitale Schnittstelle mit einer für mehrere Teilnehmeranschlußschaltungen zentralen Steuereinheit in Informationsaustausch steht.

Eine solche Schaltung ist aus EP-A-194177 bekannt.

Die erwähnte Gliederung in Hochvoltteil und Niedervoltteil der Schnittstellenschaltung der vorausgesetzten Teilnehmeranschlußschaltung hat ihren Grund darin, daß derzeit eine Vollintegration aller Schnittstellenfunktionen noch nicht möglich ist. Wesentliche Funktionen des Hochvoltbausteins sind dabei die Speisefunktionen der Niedervoltteil realisiert dagegen in erster Linie die Regelfunktionen für den genannten Hochvoltbaustein sowie der Einspeisung der Ruf- und Gebührenimpulse.

Die erwähnte Abschaltung von der Versorgungsspannung des Hochvoltteils in belegungsfreien Zeiten dient der Verlustleistungsreduzierung.

Die Aufgabe der vorliegenden Erfindung besteht nun darin, die Verlustleistung weiter zu verringern, da hiervon die Lebensdauer eines Vermittlungssystems, bei dem eine große Vielzahl solcher Schnittstellenschaltungen vorhanden sind, entscheidend abhängt.

Erfindungsgemäß wird diese Aufgabe dadurch gelöst, daß die eine der beiden Versorgungsspannungen des Niedervoltteils über einen durch einen Widerstand überbrückten Schalter zugeführt wird, der in der genannten belegungsfreien Zeit geöffnet ist, und daß der Widerstand einen derartigen Widerstandswert aufweist, daß durch Öffnen des Schalters bei unverändert anliegender anderer Versorgungsspannung die an der digitalen Schnittstelle vorhandene Spannung keinen Polaritätswechsel erfährt.

Dadurch, daß bei der erfindungsgemäßen Lösung die eine Versorgungsspannung in belegungsfreien Zeiten nicht vollständig weggeschaltet wird, sondern über einen relativ hochohmigen Widerstand zugeführt wird, kann eine Verlustleistungsreduzierung erzielt werden, ohne daß ein Polaritätswechsel an der Schnittstelle zur zentralen Steuereinheit auftritt, der zu einer Zerstörung der elektronischen Bauelemente dieser Steuereinheit führen könnte. Im Hinblick auf den Aufwand ist diese Lösung günstiger als das Wegschalten beider Versorgungsspannungen, was bezüglich der Gefährdung der Bauelemente der zentralen Steuereinheit zum selben Ergebnis führen würde, da nur ein Schalter benötigt wird. Auf der anderen Seite würde unter dem Aspekt der Verlustleistungsreduzierung die Wegschaltung auch der anderen Versorgungsspannung nur eine geringfügige weitere Verbesserung mit sich bringen.

Nachstehend wird die Erfindung anhand eines Ausführungsbeispiels unter Bezugnahme auf eine Zeichnung näher erläutert, die in Blockbildform Teile einer Teilnehmeranschlußschaltung einer digitalen Zeitmultiplex-Vermittlungsstelle zeigt.

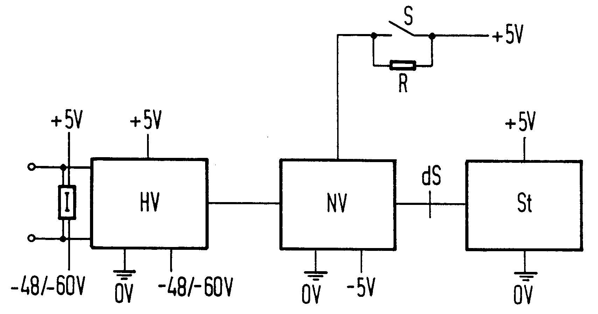

Von den Bestandteilen einer Teilnehmeranschlußschaltung sind in der Figur der Hochvoltteil HV und der Niedervoltteil NV der Schnittstellenschaltung sowie eine zentrale Steuereinheit St dargestellt, die mehrere Teilnehmerschaltungen bedienen kann. Der Hochvoltteil HV wird hier zwischen einer positiven Versorgungsspannung von +5V und einer negativen Versorgungsspannung von wahlweise 48V und -60V betrieben, je nach der Länge der angeschlossenen Teilnehmeranschlußleitung TL. In belegungsfreien Zeiten wird der Hochvoltteil HV in nicht dargestellter Weise abgeschaltet, um die Verlustleistung zu verringern. Damit in diesen sogenannten Power-down-Zustand dennoch eine Indikation des Teilnehmerleitungszustandes möglich ist, ist eine gesonderte Indikationsschaltung I vorgesehen, die dauernd angeschaltet bleibt.

Der Niedervoltteil NV der Schnittstellenschaltung wird zwischen der positiven Versorgungsspannung +5V und der negativen Versorgungsspannung -5V betrieben. Die positive Versorgungsspannung wird über einen Schalter S zugeführt, der durch einen Widerstand R überbrückt ist. Dieser Schalter ist im belegungsfreien Zustand immer geöffnet, so daß die positive Versorgungsspannung +5V über den erwähnten Widerstand R anliegt. Bei einer völligen Abtrennung der positiven Versorgungsspannung bei unverändertem Anliegen der negativen Versorgungsspannung -5V würde an der digitalen Schnittstelle dS zur zentralen Steuereinheit ST ein Potentialwechsel von positivem Potential zu negativem Potential stattfinden, was zu einer Zerstörung der Bausteine oder Bauelemente der Steuereinheit führen könnte. Der den Schalter S überbrückende Widerstand R ist so bemessen, daß unter bestmöglicher Verringerung der Verlustleistung ein solcher Potentialwechsel aber nicht eintreten kann.

## Patentansprüche

1. Teilnehmeranschlußschaltung einer digitalen Zeitmultiplex-Fernmeldevermittlungsstelle mit einer in einen Hochvoltteil (HV) und einen Niedervoltteil (NV) gegliederten Schnittstellenschaltung für den Anschluß einer analogen Teilnehmeranschlußleitung, bei der der Hochvoltteil in belegungsfreien Zeiten abgeschaltet ist und bei der der Niedervoltteil zwischen einer positiven und einer negativen Versorgungsspannung betrieben wird und über eine digitale Schnittstelle (dS) mit einer zentralen Steuereinheit in Informationsaustausch steht,
**dadurch gekennzeichnet,**
daß die eine der beiden Versorgungsspannungen (+5V) des Niedervoltteils (NV) über einen durch einen Widerstand (R) überbrückten Schalter (S) zugeführt wird, der in der genannten belegungsfreien Zeit geöffnet ist, und daß der Widerstand einen derartigen Widerstandswert aufweist, daß durch Öffnen des Schalters bei unverändert anliegender anderer Versorgungsspannung (-5V) des Niedervoltteils die an der digitalen Schnittstelle (S) vorhandene Spannung keinen Potentialwechsel erfährt.

## Claims

1. Subscriber line circuit of a digital time-division multiplex telecommunication exchange having an interface circuit divided into a high-voltage section (HV) and a low-voltage section (NV) for connecting an analog subscriber line, in which the high-voltage section is switched off during idle periods and in which the low-voltage section is operated between a positive and a negative supply voltage and exchanges information with a central processor via a digital interface (ds), characterized in that one of the two supply voltages (+5V) of the low-voltage section (NV) is supplied via a switch (S) which is bypassed by a resistor (R) and which is opened during the said idle period, and in that the resistor exhibits such a resistance value that the voltage present at the digital interface (S) does not experience a change in potential through opening of the switch, the other supply voltage (-5V) of the low-voltage section being present unchanged.

## Revendications

1. Circuit de raccordement d'abonné d'une installation de commutation de télécommunication numérique à multiplexage temporel comportant un circuit d'interface subdivisé en une partie à haute tension (HV) et une partie à basse tension (NV), pour le raccordement d'une ligne analogique d'abonné, et dans lequel la partie à haute tension est déconnectée pendant les intervalles de temps non occupés et la partie à basse tension fonctionne entre une tension d'alimentation positive et une tension d'alimentation négative et échange des informations avec une unité de commande centrale, par l'intermédiaire d'une interface numérique (dS),
caractérisé par le fait
que l'une des deux tensions d'alimentation (+ 5 V) de la partie à basse tension (NV) est appliquée par l'intermédiaire d'un interrupteur (S) qui est shunté par une résistance (R) et qui est ouvert pendant ledit intervalle de temps de non occupation et que la résistance possède une valeur résistive telle que sous l'effet de l'ouverture de l'interrupteur et alors que l'autre tension d'alimentation (- 5 V) de la partie à haute tension reste appliquée sans modification, la tension présente au niveau de l'interface numérique (S) ne subit aucun changement de potentiel.
